# EUROPEAN PATENT SPECIFICATION

(11) **EP 2 504 220 B1**
(45) Date of publication and mention of the grant of the patent: **26.06.2019**
(21) Application number: 10833661.1
(22) Date of filing: 18.11.2010
(51) Int. Cl.: B62D 5/00, B62D 15/02, B62D 5/065, B62D 5/083

(54) **ARRANGEMENT FOR ACTIVE STEERING AND SERVO-STEERING WITH SUCH AN ARRANGEMENT**
ANORDNUNG FÜR AKTIVE LENKUNG UND SERVOLENKUNG MIT EINER SOLCHEN ANORDNUNG
DISPOSITIF POUR DIRECTION ACTIVE ET DIRECTION ASSISTÉE COMPORTANT UN TEL DISPOSITIF

(30) Priority: 25.11.2009 SE 0950895
(43) Date of publication of application: 03.10.2012
(73) Proprietor: Scania CV AB, 151 87 Södertälje (SE)
(72) Inventor: ROTHHÄMEL, Malte, S-141 42 Huddinge (SE)
(74) Representative: Scania CV AB
(86) International application number: PCT/SE2010/051270
(87) International publication number: WO 2011/065895

(56) References cited:
- EP-A1- 2 070 804
- EP-A2- 1 695 892
- DE-A1-102008 052 219
- DE-C1- 4 242 441
- US-A- 5 119 898
- US-A- 5 454 439
- US-A1- 2003 196 849
- US-A1- 2006 052 201
- US-A1- 2007 080 015

## Description

### TECHNICAL FIELD

The invention relates to a device for active steering of a vehicle with a power steering arrangement, comprising a valve body arranged to be switched in opposite directions by a steering wheel movement for distribution of a pressurised fluid to a fluid-driven actuator in the power steering arrangement. The invention also relates to a power steering arrangement provided with such a device.

### BACKGROUND

It is presently desired to control power steering arrangements for motor vehicles by using signals which are independent of the driver's own steering wheel movements, e.g. by means of assistance systems such as Lane Assist or Park Assist. Known systems of this kind may comprise an electric motor which at some point in the steering column acts upon, for example, an input to a differential gear which has a second input acted upon by the driver's own steering wheel movements. However, such a solution takes up a relatively large amount of the already limited space around the steering column. It is therefore desirable to be able to save space by utilising the servo system already in place. EP 1 695 892 A2 discloses a device according to the preamble of claim 1.

### SUMMARY OF THE INVENTION

One object of the invention is therefore to provide a device of the kind indicated in the introduction which takes up little space and which can utilise the existing components of the power steering arrangement.

According to a version of the invention, the valve body is divided into a pair of parts which are movable in mutually opposite directions, and positioning means operate between the parts in order to switch the valve body independently of the steering wheel movement. This division of the valve body allows the same valve to be used both for external control signals and for the driver's manual control signals. The external control signals can then be superimposed on the driver's control signals, e.g. in order to correct or assist the driver by use of sensors which detect the direction of the carriageway.

Although they may also, depending on the type of power steering, be movable, for example, axially, the parts in one embodiment of the invention are supported for rotation about a common axis, e.g. a steering column axis.

Said positioning means may then operate in a tangential clearance between the parts. They then utilise an insignificant extra space in the power steering arrangement.

The positioning means may also comprise a pair of elements each operating between opposite surfaces of the parts. A pair of opposite elements of this kind allows the parts to be switched in both directions and be returned to an inactive central position.

The positioning means may, for example, be piezoelectric elements. Two such opposite elements may also be arranged to return the parts automatically to the central position by their inherent elasticity.

The positioning means may also comprise a pressurisable fluid which may be part of the same hydraulic system as that used in the power steering arrangement.

The positioning means may further comprise electromagnetic elements, e.g. a number of electromagnets.

Other features and advantages of the invention may be indicated by the claims and description of embodiment examples set out below.

### BRIEF DESCRIPTION OF DRAWINGS

Fig. 1 is a schematic side view of a power steering arrangement according to the state of the art which may be provided with a device according to the invention;
Fig. 2 is a schematic perspective view with separated portions of part of the power steering arrangement in Fig. 1;
Fig. 3 shows, on a larger scale, a broken-off part 3 in Fig. 2 with partly separated portions and provided with a piezoelectric device according to the invention;
Fig. 4 shows two cross-sectional views in different positions through an axially overlapping portion of a divided valve body according to Figs. 2 and 3;
Fig. 5 shows two views corresponding to Fig. 4 with a hydraulic device according to the invention; and
Fig. 6 shows views corresponding to Figs. 4 and 5 of a pair of different electromagnetic devices according to the invention.

Parts with similar functions have mutually similar references throughout.

### DETAILED DESCRIPTION OF EMBODIMENTS

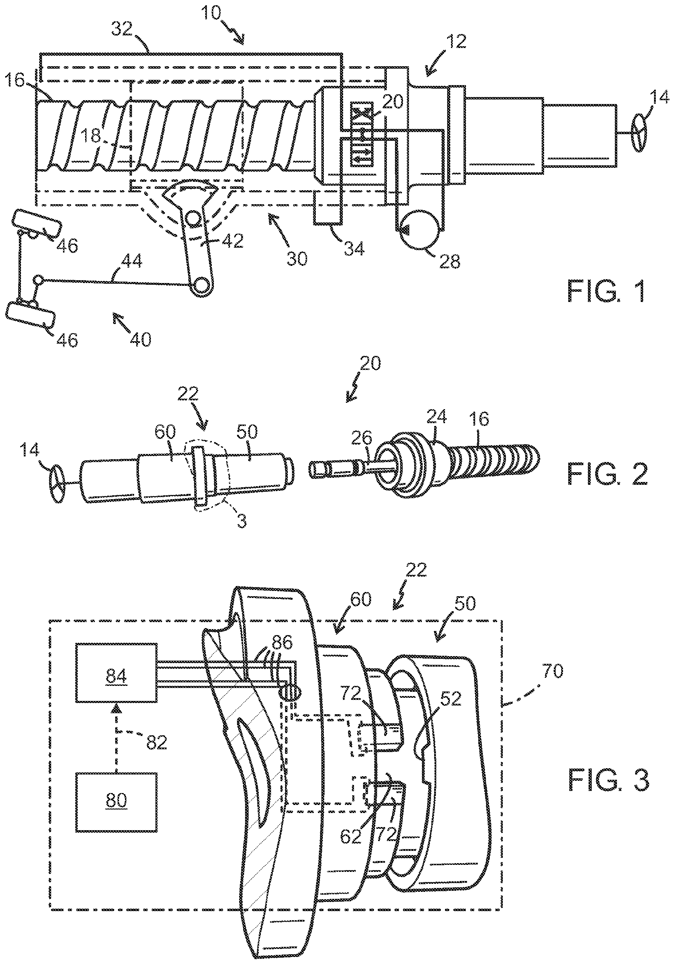

The example in Fig. 1 shows a power steering arrangement of a known type, with the general designation 10. The power steering arrangement 10 has a steering housing 12 which forms a section of a steering column and which can be rotated in both directions by a vehicle steering wheel 14.

When there is no servo function, the steering wheel 14 can operate a ball screw 16, which is in threaded engagement with a ball nut bushing 18 which is supported in a rotationally fixed position. The bushing 18 is itself in gear engagement with a lever 42 which is articulatedly connected to a push-pull rod 44 of a steering mechanism 40 for a pair of vehicle wheels 46.

In normal situations when the power steering arrangement 10 is in operation, the steering wheel 14 operates a valve body 22 (Fig. 2) in a valve housing 24 of a hydraulic valve 20 depicted schematically in Fig. 1. The valve 20 is of an open-centre type not shown in greater detail. When the valve body 22 is switched in the valve 20 by a steering movement from the steering wheel 14, hydraulic fluid from a pump 28 is fed into one or other end of an actuator in the form of a hydraulic cylinder 30 through respective pipes 32 and 34. The ball nut bushing 18, which is sealed against the walls of the cylinder 30, can then serve as a hydraulic piston which boosts the turning force exerted by the driver on the steering wheel 14 in order to steer the vehicle wheels 46.

Also operating between the steering wheel 14, the valve body 22 and the ball screw 16 / valve housing 24 is a torsion rod 26 (Fig. 2) which returns the valve body 22 to its central open position with reference to the valve housing 24 when no turning force is exerted on the steering wheel 14.

As can be seen in Fig. 3, the valve body 22 is provided with a device 70 according to the invention to make it possible to superimpose on the abovementioned steering movement from the steering wheel 14 to the valve body 22 an external control signal to the power steering arrangement. The external control signal may be delivered to a vehicle computer 80 from an undepicted sensor, e.g. a sensor which monitors a carriageway marking, and be passed on by the vehicle computer 80 to the valve body 22 via a signal converter 84 and signal connections 82, 86.

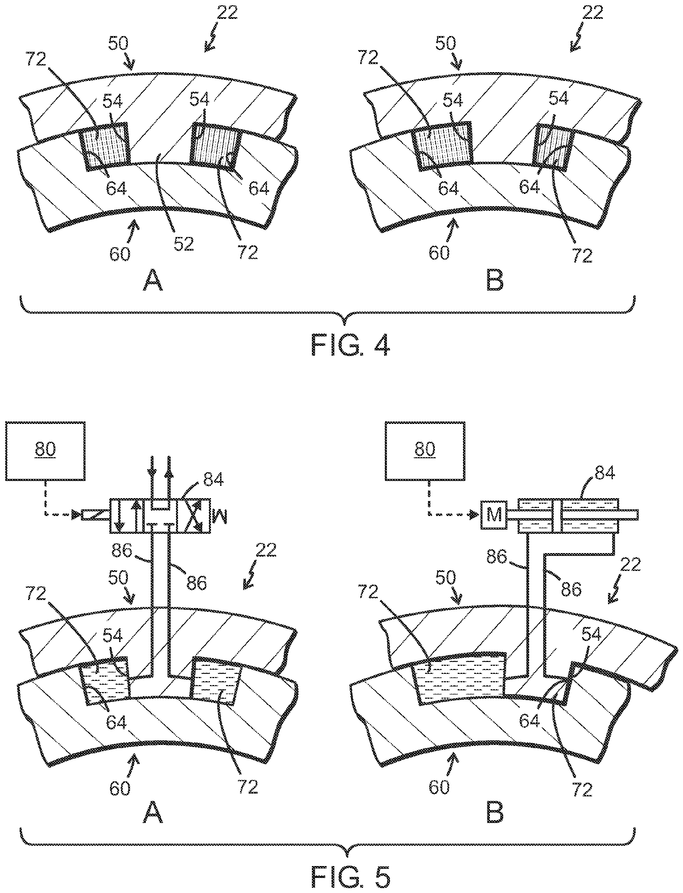

The valve body 22 is divided for this purpose into two parts 50 and 60 which are supported for rotation, viz. a part 50 which provides the valve function and a part 60 which may be firmly connected to the steering wheel 14. The parts 50, 60 are telescopically accommodated in one another by an insert connection and are mutually movable in a tangential clearance, which in the example shown is achieved by the insert connection being rotatable to a limited extent by an axial ridge 52 which is accommodated with play in an axial groove 62. As may in particular be seen in Figs. 4 and 5, the tangentially opposite radial surfaces 54, 64 on either side of the ridge 52 may then serve as stop surfaces for positioning means 72 accommodated between the surfaces 54, 64. The positioning means 72 may be arranged such that when they are inactive they hold the part 52 in a tangentially central position relative to the part 62, and that when they are active they rotate the part 52 in one direction or the other. The positioning means 72 need not necessarily be situated alongside one another, as the ridge 52 may have any desired extent in the circumferential direction.

In the embodiment according to Figs. 3 and 4, the positioning means are piezoelectric elements 72 which can be selectively charged and expanded by the signal converter 84 (Fig. 3). Such elements may be appropriate where only small positioning movements are needed to switch the part 50 relative to the part 60. To achieve larger positioning movements, they may of course be situated nearer to the common axis of rotation. When one element 72 expands upon charging, the other element 72 may be arranged to be compressed by its inherent elasticity. The elastic return of the elements to their original extent in angular directions, when neither of them is activated, can also be utilised to automatically return the part 50 to the inactive central position shown in Fig. 4A.

In the embodiment according to Fig. 5, the positioning means 72 comprise a pressurisable fluid, e.g. hydraulic fluid, which can be distributed to the spaces between the surfaces 54, 64 via a valve 84 (Fig. 5A) or directly by a double-acting, motor-driven pump 84 (Fig. 5B), in order to switch the part 50. The return to the central position may in this case be achieved, in a manner not shown, by use of return springs in the valve body 22 or in the pump 84, or by angle sensors which deliver signals to the valve/pump 84 via the vehicle computer 80.

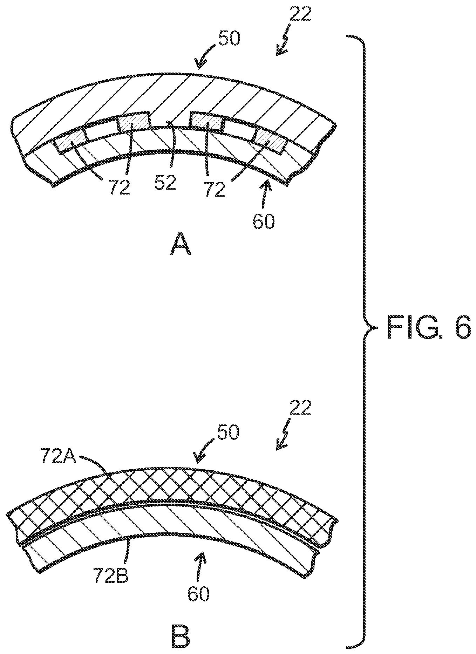

Fig. 6A shows schematically the possibility of using magnetic positioning means such as a pair of attracting electromagnets 72 in the spaces on either side of the ridge 52. Further magnets or return springs may be used, in a manner not shown, for the return of the part 50 to the central position shown.

As implied in Fig. 6B, it is also at least conceivable to configure the axially overlapping portions 72A and 72B of the parts 50, 60 as rotor and stator respectively, with an intermediate air gap, of an electric motor, as also a stepping motor or a tachometer-controlled electric motor, in order to achieve desired angular movements between the parts 50 and 60.

The description set out above is primarily intended to facilitate understanding and no unnecessary limitations of the invention are to be inferred therefrom. The modifications which will be obvious to a specialist perusing the description may be implemented without deviating from the concept of the present invention or the scope of the following claims.

## Claims

1. A device (70) for active steering of a vehicle with a power steering arrangement (10), comprising a valve body (22) arranged to be switched in opposite directions by a steering wheel movement for distribution of a pressurised fluid to a fluid-driven actuator (30) in the power steering arrangement,
**characterised by**
the valve body (22) being divided into a pair of parts which are movable in mutually opposite directions (50, 60), the parts being a part (50) which provides the valve function and a part (60) which is firmly connected to the steering wheel; and by
positioning means (72) which operate between the parts (50, 60) in order to switch the valve body (22) independently of the steering wheel movement.

2. A device according to claim 1, in which the parts (50, 60) are supported for rotation about a common axis.

3. A device according to claim 2, in which said positioning means (72) operate in a tangential clearance between the parts (50, 60).

4. A device according to claim 3, in which said positioning means comprise a pair of elements (72) each operating between opposite surfaces (54, 64) of the parts (50, 60).

5. A device according to any one of the foregoing claims, in which said positioning means comprise piezoelectric elements (72).

6. A device according to any one of claims 1-4, in which said positioning means comprise a pressurisable fluid (72).

7. A device according to any one of claims 1-4, in which said positioning means comprise electromagnetic elements (72, 72A, 72B).

8. A power steering arrangement (10) provided with a device (70) according to any one of the foregoing claims.

## Patentansprüche

1. Vorrichtung (70) zum aktiven Lenken eines Fahrzeugs mit einer Lenkhilfeanordnung (10), umfassend einen Ventilkörper (22), der dazu eingerichtet ist, durch eine Lenkradbewegung in entgegengesetzte Richtungen verschoben zu werden, um ein unter Druck gesetztes Fluid einem fluidangetriebenen Aktuator (30) in der Lenkhilfeanordnung bereitzustellen,
**gekennzeichnet durch**
den Ventilkörper (22), der in ein Paar von Teilen unterteilt ist, die in jeweils entgegengesetzte Richtungen (50, 60) bewegbar sind, wobei die Teile ein Teil (50), das die Ventilfunktion bereitstellt, und ein Teil (60) umfassen, das fest mit dem Lenkrad verbunden ist; und durch
Positioniermittel (72), die zwischen den Teilen (50, 60) agieren, um den Ventilkörper (22) unabhängig von der Lenkradbewegung zu verschieben.

2. Vorrichtung nach Anspruch 1, wobei die Teile (50, 60) zum Rotieren um eine gemeinsame Achse gelagert sind.

3. Vorrichtung nach Anspruch 2, wobei die Positioniermittel (72) in einem tangentialen Freiraum zwischen den Teilen (50, 60) agieren.

4. Vorrichtung nach Anspruch 3, wobei die Positioniermittel ein Paar von Elementen (72) umfasst, wobei jedes zwischen gegenüberliegenden Oberflächen (54, 74) der Teile (50, 60) agiert.

5. Vorrichtung nach einem der vorhergehenden Ansprüche, wobei die Positioniermittel piezoelektrische Elemente (72) umfassen.

6. Vorrichtung nach einem der Ansprüche 1-4, wobei die Positioniermittel ein unter Druck setzbares Fluid (72) umfassen.

7. Vorrichtung nach einem der Ansprüche 1-4, wobei die Positioniermittel elektromagnetische Elemente (72, 72A, 72B) umfassen.

8. Lenkhilfeanordnung (10) umfassend eine Vorrichtung (70) nach einem der vorhergehenden Ansprüche.

## Revendications

1. Dispositif (70) de direction active d'un véhicule doté d'un dispositif de direction assistée (10), comprenant un corps de soupape (22) disposé pour être actionné dans des directions opposées par un mouvement du volant pour la distribution d'un liquide pressurisé dans un vérin à commande hydraulique (30) dans le dispositif de direction assistée,
**caractérisé par**
le corps de soupape (22) étant divisé en deux pièces qui se déplacent dans des directions opposées (50, 60), les pièces étant une partie (50) qui assure la fonction de la soupape et une partie (60) qui est fermement reliée au volant ; et par
les moyens de positionnement (72) qui fonctionnent entre les pièces (50, 60) afin de changer le corps de soupape (22) indépendamment du mouvement du volant.

2. Dispositif selon la revendication 1, dans lequel les pièces (50, 60) sont supportées pour tourner autour d'un axe commun.

3. Un dispositif selon à la revendication 2, dans lequel ces moyens de positionnement (72) un fonctionnement dans un dégagement tangentiel entre les pièces (50, 60).

4. Dispositif selon la revendication 3, dans lequel ces moyens de positionnement comprennent une paire d'éléments (72) fonctionnant chacun entre des surfaces opposées (54, 64) des pièces (50, 60).

5. Dispositif selon l'une quelconque des revendications précédentes, dans lequel ces moyens de positionnement comprennent des éléments piézoélectriques (72).

6. Dispositif selon l'une quelconque des revendications 1-4, dans lequel ces moyens de positionnement comprennent un fluide pressurisable (72).

7. Dispositif selon l'une quelconque des revendications 1-4, dans lequel ce moyen de positionnement comprend des éléments électromagnétiques (72, 72A, 72B).

8. Dispositif de direction assistée (10) muni d'un dispositif (70) selon l'une quelconque des revendications précédentes.
